# EUROPEAN PATENT SPECIFICATION

(11) **EP 1 389 517 B1**
(45) Date of publication and mention of the grant of the patent: **16.07.2008**
(21) Application number: 03017568.1
(22) Date of filing: 07.08.2003
(51) Int. Cl.: B29C 45/27

(54) **Method of controlling a shut-off nozzle with heating unit and cooling unit for hot runner systems of injection molding machines**
Regelverfahren für eine Heisskanal-Verschlussdüse mit Heiz- und Kühlmitteln für Spritzgiessmaschinen
Procédé de reglage de buse à fermeture par aiguille avec moyens de chauffage et refroidissement pour machines de moulage par injection

(30) Priority: 16.08.2002 KR 2002048460
(43) Date of publication of application: 18.02.2004
(73) Proprietor: Yudo Co., Ltd., Hwasung-si, Gyonggi-do 445-911 (KR)
(72) Inventor: Yu, Young-Hee, Seoul 158-762 (KR)
(74) Representative: Banzer, Hans-Jörg

(56) References cited:
- EP-A- 0 496 284
- WO-A-00/30829
- WO-A-97/27988
- DE-C- 3 343 822
- US-A- 2 541 201
- US-A- 4 642 043
- US-A- 4 894 197
- US-A- 4 954 072
- PATENT ABSTRACTS OF JAPAN vol. 008, no. 267 (M-343), 7 December 1984 (1984-12-07) & JP 59 140041 A (SUMITOMO JUKIKAI KOGYO KK), 11 August 1984 (1984-08-11)
- PATENT ABSTRACTS OF JAPAN vol. 010, no. 142 (M-481), 24 May 1986 (1986-05-24) & JP 60 264216 A (SHIGERU TSUTSUMI), 27 December 1985 (1985-12-27)

## Description

The present invention relates to a method of controlling a nozzle for hot runner systems of injection molding machines and, more particularly, to a method of controlling a shut-off nozzle for hot runner systems of injection molding machines, which has both a heating unit and a cooling unit at a gate tip thereof so as to maintain a desired fluidity of a molten resin in a nozzle gate of the gate tip for a desired time period, and quickly cool the resin to make the resin quickly lose the fluidity, thus allowing the resin to smoothly flow in the nozzle gate for the desired time period, prior to quickly coagulating in the nozzle gate, and in which the nozzle gate is cooled to a temperature equal to that of the cavity of a mold, thus allowing a molded product in the cavity of the mold to be evenly cooled while preventing an undesired formation of cold slugs at areas of the molded product around the nozzle gate, and thereby improving the quality of molded products, and saving time during a plastic injection molding process.

As well known to those skilled in the art, a nozzle for hot runner systems of injection molding machines feeds a molten resin from a molding machine into the cavity of a mold through a nozzle gate thereof to produce a molded product in the cavity.

In a detailed description, the nozzle for hot runner systems of conventional injection molding machines typically comprises a metal nozzle body, with a heater installed around the outer surface of the nozzle body. During an injection molding process by the use of a molding machine with the nozzle, the nozzle body is heated to a desired temperature capable of allowing a molten resin to smoothly flow from the molding machine into the cavity of the mold through the nozzle gate, thus producing a molded product in the cavity. In such a case, the temperature of the nozzle body is measured and controlled by the use of a thermocouple, so that the molten resin smoothly and continuously flows into the cavity of the mold without undesirably coagulating in the nozzle gate.

However, in the conventional nozzle for hot runner systems of conventional injection molding machines, the nozzle gate is always open, so that the molten resin may undesirably flow from the open nozzle gate even after the cavity of the mold is filled with a predetermined amount of the resin. Therefore, the conventional nozzle gate is problematic in that the molded product may have an uneven surface, or cold slugs may be formed at areas of the molded product positioned around the nozzle gate. Due to the uneven surface of the molded product and the cold slugs, productivity and work efficiency during the plastic injection molding process are reduced.

In an effort to overcome the above-described problems, valve gate nozzles and shut-off nozzles have been proposed and used in the field.

The valve gate nozzles are designed to mechanically open or close a nozzle gate by the use of both a valve pin and a cylinder actuator. Examples of conventional valve gate nozzles may be referred to Korean Patent No. 100099, entitled "Nozzle with embedded heating wire for injection molding machines", Korean Patent No. 323461, entitled "Nozzle for injection molding machines manufactured through electroforming process, and method of producing the same", Korean Patent No. 323460, entitled "Resin injection unit for injection molding machines with single piston capable of actuating several valve pins", and Korean Patent No. 323458, entitled "Nozzle for injection molding machines with single heating unit capable of heating several nozzles".

In the conventional valve gate nozzles, the molten resin passes along the valve pin at a high speed while surrounding the valve pin. Therefore, the molten resin having high thermal energy heats the valve pin. However, since the conventional valve gate nozzles do not have any means for properly cooling the valve pin, the valve pin may be easily overheated.

Since the overheated valve pin comes into contact with a molded product in the cavity of a mold, there is a large difference in temperature between a part of the resin previously injected into the cavity of the mold and another part of the resin, which is in contact with the hot nozzle gate. Therefore, the molded product is not evenly cooled, but is cooled at different cooling rates, so that the molded product may have an uneven surface, or cold slugs may be formed at areas of the molded product around the nozzle gate. Due to the uneven surface or the cold slugs, the appearance of the molded product is degraded, thus reducing the quality of the product. Sometimes, the molded products having the poor quality must be discarded.

The conventional shut-off nozzles are provided with an electric flash-heating unit around a nozzle gate to flash-heat the nozzle gate, thus allowing the resin to smoothly flow in the nozzle gate. When it is desired to cool the nozzle gate, the flash-heating unit is turned off to allow the nozzle gate to gradually cool. However, the conventional shut-off nozzles are problematic in that since it is impossible to control the cooling rate of the nozzle gate, the gate cooling time is undesirably lengthened, thus degrading productivity of the injection molding process.

That is, since the electric flash-heating unit is installed around the nozzle gate of the conventional shut-off nozzle, it is possible to easily heat the nozzle gate. However, the nozzle gate of the shut-off nozzle cools through a natural cooling manner after the flash-heating unit is turned off. It is thus impossible to control the cooling rate of the nozzle gate, and the cooling time is undesirably lengthened. Therefore, the shut-off nozzles are not suitable for mass production of molded products, and thereby degrade productivity of the injection molding process.

US 4,894,197 discloses a runnerless method for injecting and molding a resin through a gate wherein cooling water is used for cooling the mechanism after the injection operation is completed.

EP 496 284 A2 discloses an injection molding apparatus in which the heat is switched off and the cooling is turned on shortly before the mold is opened for injection.

Accordingly, the present invention has been made keeping in mind the above problems occurring in the prior art.

It is an object of the present invention is to provide a method of controlling the shut-off nozzle for hot runner systems of injection molding machines, allowing an evenly cooling and preventing a formation of an uneven surface.

According to the present invention, the above object is achieved by a method of controlling a shut-off nozzle as defined in claim 1.

In order to accomplish the above objects, the present invention provides a method of controlling a shut-off nozzle for hot runner systems of injection molding machines, the shut-off nozzle having a heating unit and a cooling unit around a gate tip thereof, the method comprising the steps of: heating a nozzle body to a predetermined high temperature by turning on a heater which is provided at the nozzle body; heating the gate tip having a nozzle gate, by turning on the heating unit provided around the gate tip; injecting a molten resin into a cavity of a mold through the nozzle gate; operating the cooling unit provided around the gate tip, before an injection of a predetermined amount of the molten resin into the cavity of the mold is completed, thus quickly cooling the gate tip; turning off the heating unit provided around the gate tip, after the injection of the predetermined amount of the molten resin into the cavity of the mold is completed; and opening the mold to remove a molded product from the cavity of the mold.

The above and other objects, features and other advantages of the present invention will be more clearly understood from the following detailed description taken in conjunction with the accompanying drawings, in which:
FIG. 1 is a block diagram showing an injection molding process executed with a shut-off nozzle, not forming part of the present invention;
FIG. 2 is a block diagram of an injection molding process executed with the shut-off nozzle, not forming part of the present invention;
FIG. 3 is a block diagram of an injection molding process executed with the shut-off nozzle, according to an embodiment of the present invention;
FIG. 4 is a sectional view of the shut-off nozzle of the present invention in which the parts of the nozzle are assembled into a single body;
FIG. 5 is a sectional view of a gate tip provided in the shut-off nozzle of FIG. 4, in which both a flash-heating unit to heat the gate tip by the use of electricity and a flash-cooling unit to cool the gate tip by the use of cooling water compressed air are provided around the nozzle gate;
FIG. 6 is a sectional view of a gate tip not forming part of the present invention, in which a flash-heating unit and a flash-cooling unit, which are fabricated in the form of a thermo-module, are provided around the gate tip; and
FIG. 7 is a perspective view of the thermo-module used in the gate tip of FIG. 6.

Reference should now be made to the drawings, in which the same reference numerals are used throughout the different drawings to designate the same or similar components.

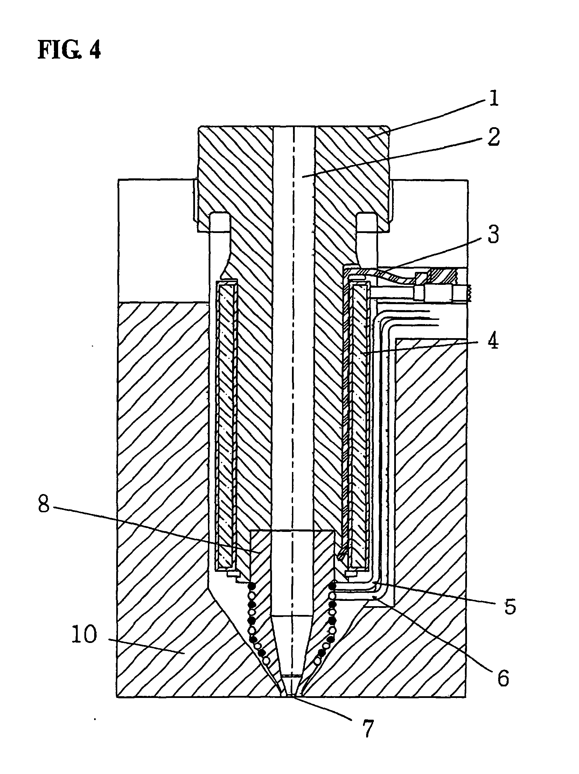

FIG. 4 is a sectional view of a nozzle for hot runner systems of injection molding machines, according to an embodiment of the present invention in which the parts of the nozzle are assembled into a single body. As shown in the drawing, the shut-off nozzle for hot runner systems of injection molding machines according to the present invention comprises a nozzle body 1 which has a resin hole 2, a heater 4, and a thermocouple 3 to sense a temperature of the nozzle body 1. The resin hole 2 is axially formed in the nozzle body 1, while the heater 4 and the thermocouple 3 are provided around the nozzle body 1. The nozzle also has a gate tip 8 having a nozzle gate 7 at which the nozzle body 1 comes into contact with a cavity 10 of a mold. A heating unit 5 is provided around the gate tip 8 to heat the gate tip 8 by using electricity. A cooling unit 6 is provided around the gate tip 9 in parallel to the heating unit 5, so that a coolant passes through the cooling unit 6 to cool the gate tip 8.

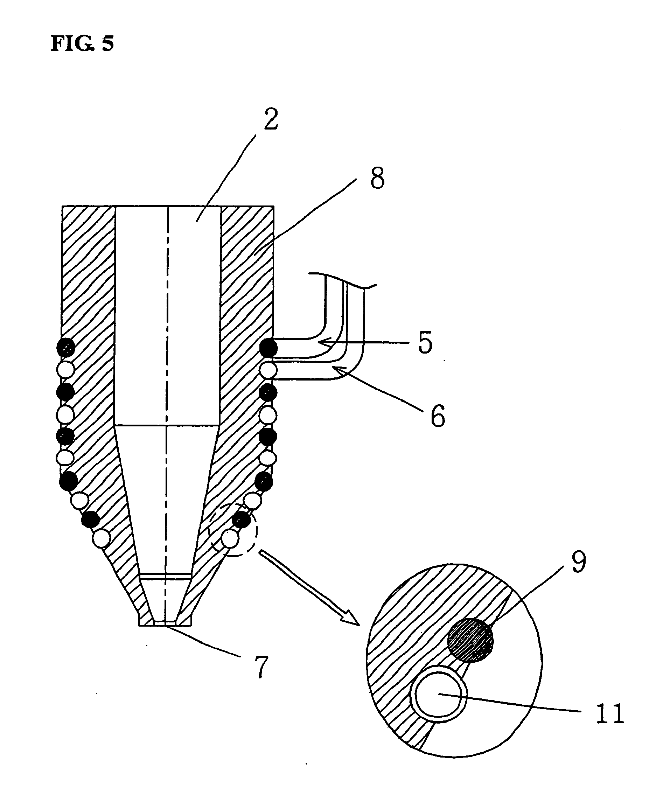

In the embodiment of FIGS. 4 and 5, the heating unit 5 and the cooling unit 6 respectively comprise a heating coil 9 and a cooling pipe 11 which are wound around the gate tip 8, and the coolant, selected from cooling water and compressed air, passes through the cooling pipe 11.

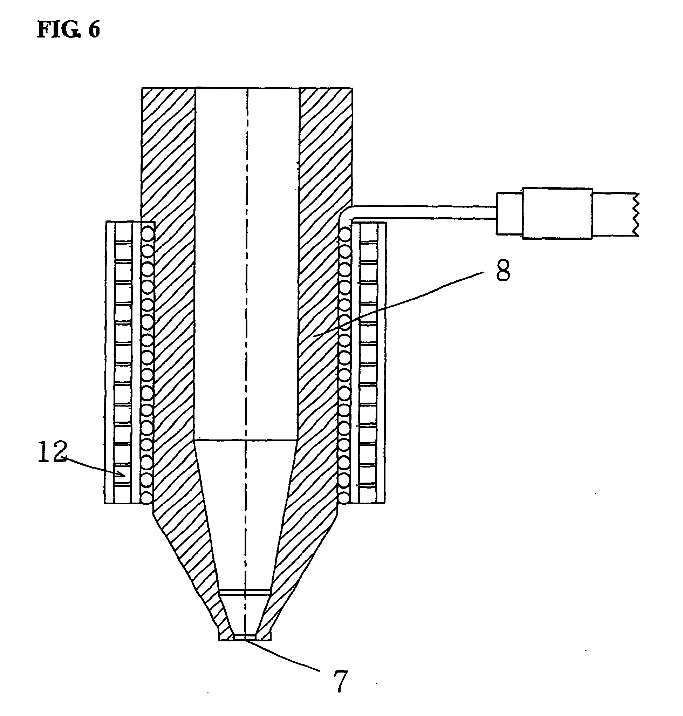

In another embodiment not forming part of the present invention, the heating unit 5 and the cooling unit 6 are fabricated into a thermo-module 12, as shown in FIG. 6.

The operational effect of the nozzle according to the present invention will be described herein below.

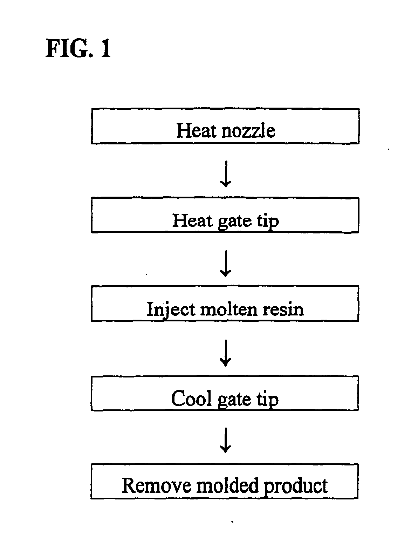

FIG. 1 is a block diagram showing general steps of an injection molding process executed with a nozzle, according to an embodiment not forming part of the present invention. The method of controlling the shut-off nozzle according to the first embodiment is executed as follows. That is, a nozzle body 1 is heated to a predetermined high temperature by turning on the heater 4 which is provided in the nozzle body 1. In addition, the gate tip 8 having the nozzle gate 7 is heated by turning on the heating unit 5 provided around the gate tip 8. In such a case, the heating of the gate tip 8 and the heating of the nozzle body 1 are started at the same time.

Thereafter, the heated nozzle is brought into contact with the cavity 10 of the mold, prior to injecting a molten resin into the cavity 10 through the nozzle gate 7. After an injection of a predetermined amount of the molten resin into the cavity 10 is completed, the heating unit is turned off, thus allowing the gate tip 8 to start to cool. In addition, the cooling unit 6 provided around the gate tip 8 is operated to quickly cool the gate tip 8. The nozzle gate 7 of the gate tip 8 is thus quickly cooled so as to allow the resin in the cavity 10 to be evenly cooled. In such a case, it is possible to prevent formation of an uneven surface on a molded product, or formation of cold slugs at areas of the molded product positioned around the nozzle gate 7. After a predetermined time goes by, the mold is opened to remove the molded product from the cavity 10 of the mold.

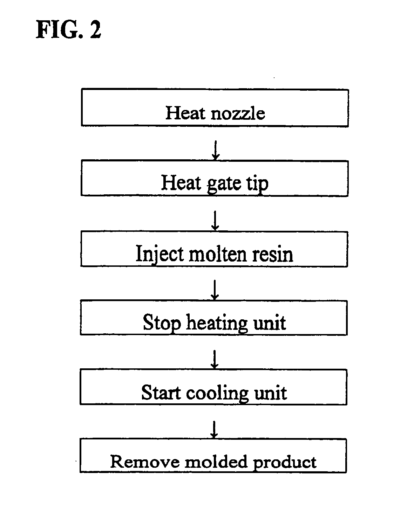

FIG. 2 is a block diagram of an injection molding process executed with the shut-off nozzle, according to an embodiment not forming part of the present invention. The method of controlling the shut-off nozzle according to that embodiment is executed as follows. That is, the nozzle body 1 is heated to a predetermined high temperature by turning on the heater 4 which is provided in the nozzle body 1. In addition, the gate tip 8 having the nozzle gate 7 is heated by turning on the heating unit 5 provided around the gate tip 8. Thereafter, the heated nozzle is brought into contact with the cavity 10 of the mold, prior to injecting a molten resin into the cavity 10 through the nozzle gate 7. The heating unit 5 is turned off before an injection of a predetermined amount of the molten resin into the cavity 10 of the mold is completed, thus allowing the gate tip 8 to start to cool. The cooling unit 6 provided around the gate tip 8 is operated after the injection of the predetermined amount of the molten resin into the cavity 10 is completed, thus quickly cooling the nozzle gate 7 to a temperature equal to that of the cavity 10. A molded product in the cavity 10 is thus evenly cooled while preventing an undesired formation of an uneven surface on the molded product, or formation of cold slugs at areas of the molded product positioned around the nozzle gate 7. After a predetermined time goes by, the mold is opened to remove the molded product from the cavity 10 of the mold.

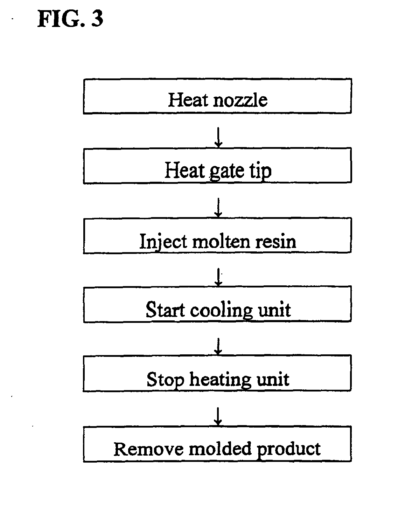

FIG. 3 is a block diagram of an injection molding process executed with the shut-off nozzle, according to the present invention. The method of controlling the shut-off nozzle according to the third embodiment is executed as follows. That is, the nozzle body 1 is heated to a predetermined high temperature by turning on the heater 4 which is provided in the nozzle body 1. In addition, the gate tip 8 having the nozzle gate 7 is heated by turning on the heating unit 5 provided around the gate tip 8. Thereafter, the heated nozzle is brought into contact with the cavity 10 of the mold, prior to injecting a molten resin into the cavity 10 through the nozzle gate 7. The cooling unit 6 provided around the gate tip 8 is operated before an injection of a predetermined amount of the molten resin into the cavity 10 of the mold is completed, thus cooling the gate tip 8.

The heating unit 5 provided around the gate tip 8 is turned off after the injection of the predetermined amount of the molten resin into the cavity 10 of the mold is completed. The nozzle gate 7 is thus quickly cooled to a temperature equal to that of the cavity 10, thus allowing a molded product in the cavity 10 to be evenly cooled while preventing an undesired formation of an uneven surface on the molded product, or formation of cold slugs at areas of the molded product positioned around the nozzle gate 7. After a predetermined time goes by, the mold is opened to remove the molded product from the cavity 10 of the mold.

The operation of the shut-off nozzle according to the present invention is described in more detail herein below.

When the heater 4 provided in the nozzle body 1 is turned on, the heater 4 heats the entire parts of the nozzle. In such a case, the temperature of the heated nozzle is sensed and controlled by the thermocouple 3.

The heating unit 5 is provided around the gate tip 8 at which the nozzle comes into contact with the mold. The heating unit 5 may be designed as an electric flash-heating unit capable of flash-heating the nozzle gate 7 of the gate tip 8 by using electricity.

In addition, the cooling unit 6 is provided around the gate tip 9 in parallel to the heating unit 5, so that the coolant, such as cooling water or compressed air, passes through the cooling unit 6 to quickly cool the gate tip 8.

When the cooling pipe 11 is used as the cooling unit 6, the cooling pipe 11 is wound around the gate tip 8. In such a case, the cooling pipe 11 may be set along and welded to a spiral groove formed around the outer surface of the gate tip 8. In another embodiment, the cooling pipe 11 may be embedded in a sidewall of the gate tip 8.

When the molten resin is injected into the cavity 10 of the mold through the nozzle, the flash-heating unit 5 quickly heats the gate tip 8, thus maintaining a desired fluidity of the molten resin in the nozzle gate 7 of the gate tip 8 for a desired time period. After the injection of the predetermined amount of the molten resin into the cavity 10 of the mold is completed, the coolant, selected from the cooling water and the compressed air, passes through the cooling unit 6, thus allowing the molten resin in the nozzle gate 7 to quickly coagulate.

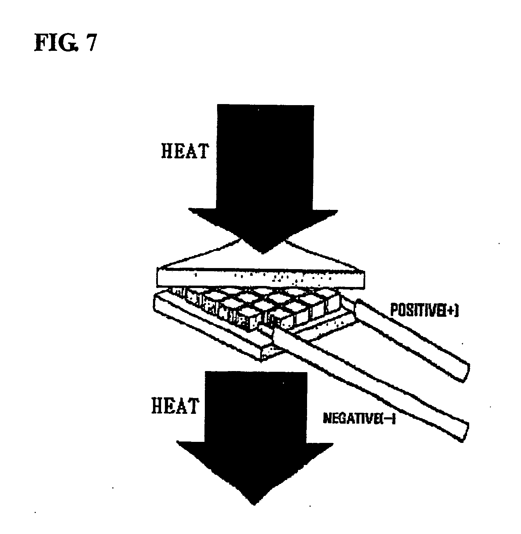

In the shut-off nozzle according to FIG. 6, the thermo-module 12 is used as the heating unit 5 and the cooling unit 6. The construction and operation of the thermo-module 12 is shown in FIG. 7.

The thermo-module 12 is a heat pump designed to have the Peltier effect, in which heat is evolved or absorbed at a junction of two dissimilar materials carrying an electric current, depending upon the direction of the electric current.

The thermo-module 12 is operated as follows. To heat the gate tip 8, a positive current (+) flows in the thermo-module 12. The thermo-module 12 thus evolves heat to the gate tip 8, and maintains the desired fluidity of the molten resin in the nozzle gate 7 of the gate tip 8 for a desired time period. However, when a negative current (-) flows in the thermo-module 12, the thermo-module 12 absorbs heat from the gate tip 8, thus quickly cooling the nozzle gate 7 of the gate tip 8.

As described above, the present invention provides a method of controlling a shut-off nozzle for hot runner systems of injection molding machines. The shut-off nozzle has both a flash-heating unit and a flash-cooling unit at a gate tip having a nozzle gate so as to maintain a desired fluidity of a molten resin in the nozzle gate for a desired time period, and quickly cool the resin to make the resin quickly lose the fluidity, thus improving productivity of an injection molding process. The shut-off nozzle properly controls conditions required to allow the resin to quickly coagulate in the nozzle gate, thus allowing a user to more effectively open or close the nozzle gate during an injection molding process.

Although preferred embodiments of the present invention have been described for illustrative purposes, those skilled in the art will appreciate that various modifications, additions and substitutions are possible, without departing from the invention as disclosed in the accompanying claims.

## Claims

1. A method of controlling a shut-off nozzle for hot runner systems of injection molding machines, the shut-off nozzle having a heating unit (5) and a cooling unit (6) around a gate tip (8) thereof, the method comprising the steps of:
heating a nozzle body (1) to a predetermined high temperature by turning on a heater (4) which is provided at the nozzle body (1);
heating the gate tip (8) having a nozzle gate (7), by turning on the heating unit (5) provided around the gate tip (8) ;
injecting a molten resin into a cavity (10) of a mold through the nozzle gate (7);
operating the cooling unit (6) provided around the gate tip (8), before an injection of a predetermined amount of the molten resin into the cavity (10) of the mold is completed, thus quickly cooling the gate tip (8);
turning off the heating unit (5) provided around the gate tip (8), after the injection of the predetermined amount of the molten resin into the cavity (10) of the mold is completed; and
opening the mold to remove a molded product from the cavity (10) of the mold.

## Patentansprüche

1. Verfahren zur Steuerung einer Verschlussdüse für Heißkanalsysteme von Spritzgießmaschinen, wobei die Verschlussdüse eine Heizeinheit (5) und eine Kühleinheit (6) um eine Angussspitze (8) derselben hat, wobei das Verfahren die folgenden Schritte umfasst:
Heizen eines Düsenkörpers (1) auf eine vorbestimmte hohe Temperatur durch Anstellen eines Heizelements (4), welches an dem Düsenkörper (1) angeordnet ist;
Heizen der Angussspitze (8), die einen Düsenanguss (7) hat, durch Anstellen des Heizelementes (5), das um die Angussspitze (8) angeordnet ist;
Einspritzen eines geschmolzenen Harzes in eine Formhöhlung (10) eines Formwerkzeugs durch den Düsenanguss (7);
In-Betrieb-Setzen der Kühleinheit (6), die um die Angussspitze (8) angeordnet ist, bevor ein Einspritzen einer vorbestimmten Menge des geschmolzenen Harzes in die Formhöhlung (10) eines Formwerkzeugs beendet ist, wodurch die Angussspitze (8) schnell gekühlt wird;
Abstellen der Heizeinheit (5), die um die Angusspitze (8) angeordnet ist, nachdem das Einspritzen der vorbestimmten Menge des geschmolzenen Harzes in die Formhöhlung (10) des Formwerkzeugs beendet ist, und
Öffnen des Formwerkzeugs, um ein geformtes Produkt aus der Formhöhlung (10) des Formwerkzeugs zu entfernen.

## Revendications

1. Procédé de réglage d'une buse à fermeture par aiguille d'une machine de moulage par injection à chaud, la buse à fermeture par aiguille comprenant un moyen de chauffage (5) et un moyen de refroidissement (6) disposé autour de l'embout d'alimentation de celle-ci, la méthode comprenant les étapes de :
- chauffage d'un corps de buse (1) jusqu'à une température élevée prédéterminée en activant un dispositif de chauffage (4) qui est prévu dans le corps de buse ;
- chauffage de l'embout d'alimentation (8) ayant un trou de sortie (7), en activant un moyen de chauffage (5) prévu autour de la tête de sortie (8) ;
- injection d'une résine fondue dans une cavité (10) d'un moule par le trou de sortie (7) ;
- activation du moyen de refroidissement (6) prévu autour de l'embout d'alimentation (8), avant qu'une injection d'une quantité prédéfinie de résine fondue dans la cavité (10) soit réalisée, ainsi refroidir rapidement le trou de sortie (8) ;
- arrêt du moyen de chauffage (5) prévu autour de l'embout d'alimentation (8) après que l'injection de la quantité prédéterminée de la résine fondue dans la cavité (10) du moule soit réalisée ; et
- ouverture du moule pour retirer le produit moulé de la cavité (10) du moule.
